# EUROPÄISCHE PATENTANMELDUNG

(11) **EP 0 826 454 A1**
(43) Veröffentlichungstag der Anmeldung: **04.03.1998**
(21) Anmeldenummer: 96108201.3
(22) Anmeldetag: 02.09.1996
(51) Int. Cl.: B23D 61/00, B23D 61/02

(54) **Kreissäge mit den tangentialen Fliehkraftspannungen entsprechenden unterschiedlichen Dicken**

(71) Anmelder: Röttger Jansen-Herfeld, 42824 Remscheid (DE)
(72) Erfinder: Jansen-Herfeld, Röttger, Dipl.-Ing., 42853 Remscheid (DE)

(57) **Zusammenfassung**

Kreissägeblatt mit radial nach außen stetig und/oder in Stufen abnehmenden Dicken mit etwa über den ganzen Sägendurchmesser gleichmäßigen tangentialen Fliehkraftspannungen zur Erhöhung der dynamischen Steifheit und Umgehung der Innenspannung aufgrund der Anpassung der Sägeblattdicke an die tangentiale Fliehkraftspannung.

## Beschreibung

Die bekannten Sägen werden zum Ausgleich der unterschiedlichen tangentialen Fliehkraftspannungen bzw. der daraus resultierenden unterschiedlichen Dehnungen innerhalb einer Säge mit Innenspannungen versehen. Diese Innenspannungen werden nur partiell ringförmig eingebracht und sind somit nicht in der Lage, den stetigen radial sich verändernden Verlauf der tangentialen Fliehkraftspannungen zu kompensieren. Dadurch wird die Steifheit der Sägen mit wachsender Drehzahl = wachsender tangentialer Fliehkraftspannungen = wachsender Dehnungsdifferenzen immer geringer. Außerdem bauen sich die Innenspannungen mit der Zeit ab.

Es sind auch Sägen bekannt, deren Dicke um die Bohrung bundartig vergrößert ist. Diese Sägen sind aus maschinenkonstruktiven Gründen mit der ringförmigen Verdickung zur Befestigung versehen oder aus Gründen der statischen Versteifung nimmt die Dicke von der Peripherie zur Mitte hin zu. Eine Anpassung der Dicken an die Fliehkraftdehnungen ist nicht beabsichtigt, was auch aus der Tatsache erkennbar ist, daß alle diese Sägen mit üblichen Innenspannung versehen sind und die Dickenveränderungen weit von den Fliehkraftdehnungsveränderungen gleichdicker Sägen abweichen.

Der Erfindung liegt die Aufgabe zugrunde, ein Kreissägeblatt zu schaffen, dessen Dicke so gestaltet ist, daß die Fliehkraftdehnungen im gesamten Sägeblatt etwa gleich sind und somit keine oder nur sehr geringe Innenspannungen mehr erforderlich sind und somit die Sägen unveränderbar eine höhere dynamische Steifheit aufweisen beim Schneiden, wodurch kleinere Schnittfugen und/oder höhere Vorschübe erreichbar sind. Desweiteren können diese Sägen mit höheren Drehzahlen betrieben werden, die mit konventionellen Innenspannungen nicht erreichbar sind.

Die erfindungsgemäße Säge weist radial nach außen stetig und/oder in Stufen abnehmende Dicken auf, wobei um die Mittenbohrung des Sägeblattes ein konzentrischer Absatz exakt gleicher Dicke vorgesehen ist und das Intregral der Kurve der tangentialen Fliehkraftspannungen einer Säge mit einer gleichförmigen Dicke unter Berücksichtigung der gleichen Drehzahl und aller geometrischen Größen außer den Dicken des erfindungsgemäßen Sägeblattes im radialen Bereich vom Rand der Bohrung bis zum Zahngrund etwa gleich dem Integral des Verlaufs der Dicken des erfindungsgemäßen Sägeblattes im gleichen Integrationsbereich ist, wobei beide Kurven sich im Punkt für den Zahngrund (Integrationsendpunkt) schneiden. Jedoch kann die Dickenzunahme der Sägen im Bereich der Eindringtiefe in das Schnittgut nur so groß sein, wie der Zahnüberstand minus einer Abstandstoleranz. Aufgrund der vergrößerten Dicke zur Mitte hin steigen auch im gleichen Sinne die Fliehkräfte.

Also ist die Dickenzunahme zur Bohrung idealerweise etwas größer als es der Funktion von σ tang entspricht.

In Sonderheit weist die Säge unterhalb des Zahngrundes eine Dicke auf, die dem üblichen Zahnüberstand entspricht, weil dort die Säge Spielraum für axiale Schwingungen benötigt. Die Sägendicke der weiter innen liegenden Bereiche ist bei dem erfindungsgemäßen Sägeblatt etwas dicker als es normal der Zahnbreite bzw. dem Zahnüberstand entspricht, weil dort die Säge geringere axiale Schwingungen ausführen kann.

Ferner kann das erfindungsgemäße Sägeblatt außen im Bereich der Zähne mindestens auf einer Seite Verdickungen aufweisen, die mit einem radial weiter innen liegenden Dickenbereich eine Ebene bilden, vorzugsweise mit dem am weitesten innen liegenden Bereich, zur einfacheren Vermessung der Säge, zur Kostensenkung in der Herstellung und zur Vergrößerung der Lötflächen.

Der axiale Überstand des innersten Absatzes kann eine ganze Zahl in mm sein minus der Differenz der Überstände der Schneidzähne der erfindungsgemäßen Sägen, um die axialen Abstände zu den benachbarten Sägen dergestalt zu berücksichtigen, daß die üblichen Abstandsringe in ganzen mm plus zweimal dem Überstand der Schneidzähne hergestellt sind.

Eine weitere Form der erfindungsgemäßen Säge weist ringförmig um die Bohrung einen schmalen Bereich auf, der die Dicke üblicher Sägen im Verhältnis zur Schnittfuge hat, um die üblichen Zwischenringe verwenden zu können.

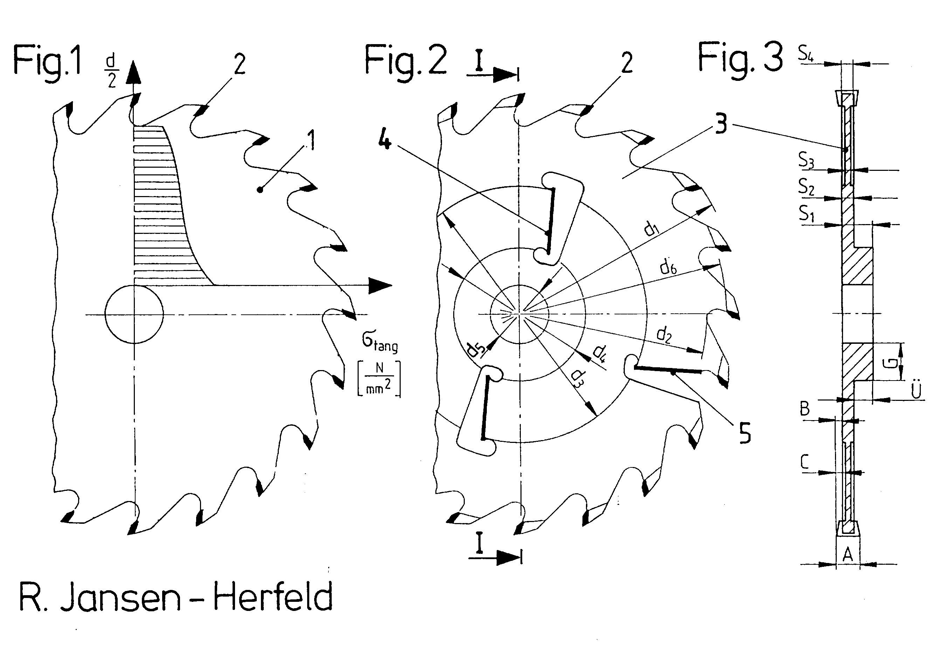

Figur 1 zeigt hälftig in Draufsicht das Sägeblatt gleicher Dicke (1) mit den Schneidzähnen (2) und dem Verlauf der tangentialen Zugspannung (σ tang) zwischen dem Bohrungsrand und dem Zahngrund.

Figur 2 zeigt hälftig in Draufsicht das mehrfach abgesetzte Sägeblatt (3) mit den Schneidzähnen (2), mit dem Sägenaussendurchmesser (d₁), dem Zahngrunddurchmesser (d₂), dem Aussendurchmesser des mittleren Absatzes (d₃), dem Aussendurchmesser des inneren Absatzes (d₄), dem Bohrungsmesser (d₅) und dem Innendurchmesser des äußeren Absatzes (d₆) und den äußeren Räumschneiden (5) und den inneren Räumschneiden (4).

Figur 3 zeigt den Schnitt I-I der Figur 2 mit der Zahnbreite (A), dem Zahnüberstand (B) gegenüber der Sägendicke des mittleren Absatzes (s₂) und dem Zahnüberstand (C) gegenüber der Sägendicke des äußeren Absatzes (s₃). Ferner zeigt Figur 3 die Sägendicke des inneren Absatzes (s₁) mit der inneren radialen Absatzbreite (G) mit dem axialen Überstand des inneren Absatzes (Ü) und die Sägendicke der Zahnverdickung (s₄), die auf einer Seite mit s₁ und beidseitig mit s₂ eine Ebene bildet.

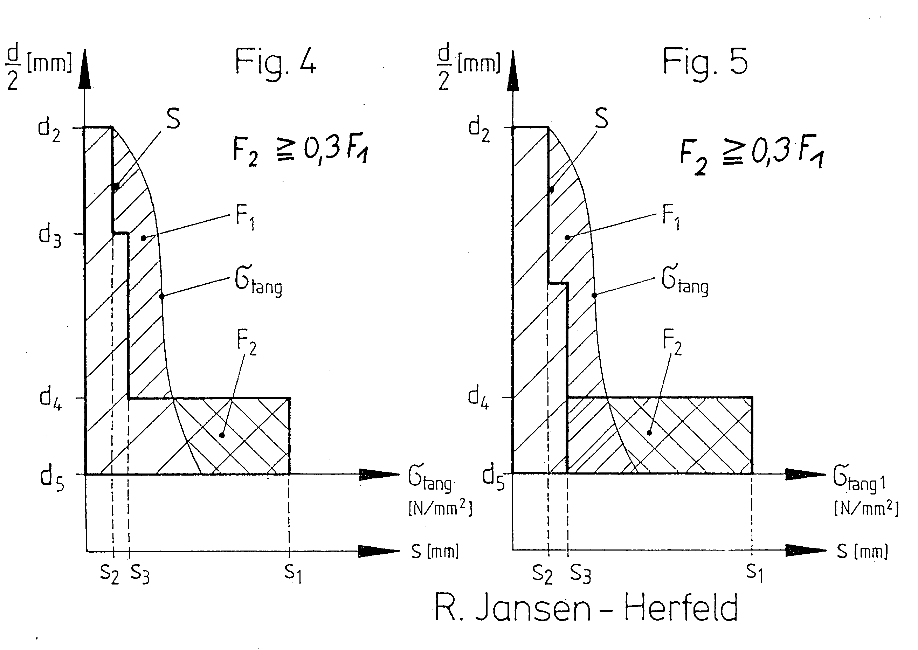

Figur 4 zeigt den radialen Dickenverlauf (s) und den radialen Verlauf der tangentialen Fliehkraftspannung (σ tang) zwischen Bohrung (d₅) und Zahngrunddurchmesser (d₂). Die beiden Flächen (F₁ und F₂) sind die Differenzflächen zwischen den beiden Integrationsflächen der tangentialen Fliehkraftspannungen (σ tang) und der Sägendicke (s), wobei gilt F₂ ≥ F₁.

Figur 5 zeigt die gleichen Diagramme wie Figur 4 jedoch für eine preiswertere erfindungsgemäße Sägenform, die aus zwei Teilen zusammengesetzt ist.

### Bezugszeichenliste

- 1: gleichdickes Sägeblatt
- 2: Schneidzähne
- 3: abgesetztes Sägeblatt
- 4: innere Räumschneide
- 4: äußere Räumschneide

- A: Zahnbreite
- B: Zahnüberstand gegenüber s₂
- C: Zahnüberstand gegenüber s₃
- G: innere radiale Absatzbreite
- Ü: Überstand des inneren Absatzes

- d₁: Sägenaussendurchmesser
- d₂: Zahngrunddurchmesser
- d₃: Aussendurchmesser des mittleren Absatzes
- d₄: Aussendurchmesser des inneren Absatzes
- d₅: Bohrungsdurchmesser
- d₆: Innendurchmesser des äußeren Absatzes
- S: Sägendicke
- s₁: Sägendicke des inneren Absatzes
- s₂: Sägendicke des mittleren Absatzes
- s₃: Sägendicke des äußeren Absatzes
- s₄: Sägendicke der Zahnverdickung

- σ tang: tangentiale Fliehkraftspannung

- F₁: Flächendifferenz zwischen den Integralen der Dicken (s) und der Fliehkraftspannung (σ tang₁) im äußeren Bereich
- F₂: Flächendifferenz zwischen den Integralen der Dicken (s) und der Fliehkraftspannung (σ tang₁) im inneren Bereich

## Patentansprüche

1. Kreissägeblatt mit radial nach aussen stetig und/oder in Stufen abnehmender Dicke dadurch gekennzeichnet, daß um die Mittenbohrung des Sägeblattes (3) ein konzentrischer Absatz exakt gleicher Dicke (s₁) vorgesehen ist und die Sägendicke (s) außerhalb des Aussendurchmessers des inneren Absatzes (d₄) radial nach aussen etwa in der Form abnimmt wie die tangentiale Fliehkraftspannung (σ tang) im gleichen Durchmesserbereich bis zum Zahngrunddurchmesser (d₂), wobei diese Dickenänderung maximal 1,2 mm beträgt und vorzugsweise gleichmäßig, beidseitig, symmetrisch zur Zahnbreite (A) angeordnet ist und das Integral der Kurve der tangentialen Fliehkraftspannungen (σ tang) einer Säge mit einer gleichförmigen Dicke unter Berücksichtigung der gleichen Drehzahl und aller geometrischen Größen außer den Dicken des Sägeblattes (3) im radialen Bereich vom Rand des Bohrungsdurchmessers (d₅) bis zum Zahngrunddurchmesser (d₂) etwa gleich dem Integral des Verlaufs der Sägendicken des Sägeblattes (3) im gleichen radialen Integrationsbereich ist, wobei beide Kurven sich im Punkt für den Zahngrund (d₂) (=Integrationsendpunkt) schneiden und die Flächendifferenz zwischen den Integralen der Dicken (s) und der Fliehkraftspannung (σ tang) im inneren Bereich (F₂) mindestens 30 % der Flächendifferenz zwischen den Integralen der Dicken (s) und der Fliehkraftspannung (σ tang) im äußeren Bereich (F₁) beträgt.

2. Kreissägeblatt nach Anspruch 1 dadurch gekennzeichnet, daß das Sägeblatt keine oder nur sehr geringe Innenspannung aufweist.

3. Kreissägeblatt nach einem oder mehreren der Ansprüche 1 bis 2 dadurch gekennzeichnet, daß der axiale Überstand der äußeren Räumschneiden (5) größer ist als der Überstand der inneren Räumschneiden (4).

4. Kreissägeblatt nach einem oder mehreren der Ansprüche 1 bis 3 dadurch gekennzeichnet, daß die innere, radiale Absatzbreite (G) max. 45 mm beträgt.

5. Kreissägeblatt nach einem oder mehreren der Ansprüche 1 bis 4 dadurch gekennzeichnet, daß der Überstand des inneren Absatzes (Ü) eine ganze Zahl in mm minus 0,1 mm beträgt.

6. Kreissägeblatt nach einem oder mehreren der Ansprüche 1 bis 5 dadurch gekennzeichnet, daß der Zahnüberstand gegenüber s₃ (C) mindestens 0,5 mm und der Zahnüberstand gegenüber s₂ (B) mindestens 0,3 mm beträgt.

7. Kreissägeblatt nach einem oder mehreren der Ansprüche 1 bis 6 dadurch gekennzeichnet, daß die Sägendicke der Zahnverdickung (s₄) gleich der Sägendicke eines weiter innen liegenden Ringbereiches ist und/oder mit diesem Ringbereich mindestens auf einer Seite eine Ebene bildet.

8. Kreissägeblatt nach einem oder mehreren der Ansprüche 1 bis 7 dadurch gekennzeichnet, daß der Aussendurchmesser des inneren Absatzes (d₄) bis etwa an den inneren Endpunkt der innersten Räumschneiden (4) reicht.

9. Kreissägeblatt nach einem oder mehreren der Ansprüche 1 bis 8 dadurch gekennzeichnet, daß die innere radiale Absatzbreite (G) größer ist als die radiale Ringbreite der Abstandsringe zwischen den Sägen.

10. Kreissägeblatt nach einem oder mehreren der Ansprüche 1 bis 9 dadurch gekennzeichnet, daß die Sägendicke des inneren Absatzes (s₁) aus mindestens zwei Teilen zusammengesetzt ist.

11. Kreissägeblatt nach einem oder mehreren der Ansprüche 1 bis 10 dadurch gekennzeichnet, daß das Sägeblatt (3) innerhalb des Absatzes mit der Sägendicke (s₁) einen Ringbereich mit der Sägendicke (s₃) aufweist für die Verwendbarkeit der normalen Zwischenringdicken.
